# EUROPEAN PATENT SPECIFICATION

(11) **EP 4 092 776 B1**
(45) Date of publication and mention of the grant of the patent: **27.08.2025**
(21) Application number: 21843541.0
(22) Date of filing: 09.07.2021
(51) Int. Cl.: H01M 4/04, B05D 3/02, B05C 9/14, H01M 4/139

(54) **ELECTRODE ROLLING DEVICE AND METHOD FOR PERFORMING MULTI-STAGE INDUCTION HEATING**
ELEKTRODENWALZVORRICHTUNG UND VERFAHREN ZUR MEHRSTUFIGEN INDUKTIONSHEIZUNG
DISPOSITIF DE LAMINAGE D'ÉLECTRODE ET PROCÉDÉ DE RÉALISATION D'UN CHAUFFAGE PAR INDUCTION EN PLUSIEURS ÉTAPES

(30) Priority: 13.07.2020 KR 20200085861; 13.07.2020 KR 20200085864
(43) Date of publication of application: 23.11.2022
(73) Proprietor: LG Energy Solution, Ltd., Seoul 07335 (KR)
(72) Inventor: KIM, Hwan Han, Daejeon 34122 (KR); SON, Young Woong, Daejeon 34122 (KR); SEOL, Jeong Soo, Daejeon 34122 (KR); OH, Jun Young, Daejeon 34122 (KR)
(74) Representative: Plasseraud IP
(86) International application number: PCT/KR2021/008785
(87) International publication number: WO 2022/014964

(56) References cited:
- JP-A- 2005 093 236
- JP-A- 2019 204 668
- KR-A- 20120 126 303
- KR-B1- 101 694 120
- KR-B1- 102 061 057
- US-A1- 2014 202 735
- US-A1- 2020 156 128

## Description

### [Technical Field]

This application claims the benefit of priority based on Korean Patent Application Nos. 10-2020-0085861 and 10-2020-0085864, filed on July 13, 2020.

The present technology relates to an electrode rolling apparatus and method for performing multi-stage induction heating.

### [Background Art]

With the increase in technology development and demand for mobile devices, the demand for secondary batteries is also rapidly increasing. Among them, lithium secondary batteries are widely used as an energy source for various electronic products as well as various mobile devices because of their high energy density and high operating voltage and excellent storage and lifetime characteristics.

As the field of application for secondary batteries expands, the demand for higher-capacity secondary batteries is increasing rapidly. As a method of increasing the capacity of the secondary battery, research on the technology for increasing the loading amount of the electrode mixture layer is being performed. However, when the loading amount of the electrode mixture layer is increased, the volume increase of the electrode is caused. In order to reduce the volume of the electrode, the process of rolling the electrode with a higher pressure is required. In the process of rolling the electrode with a high pressure, cambers may be generated on the side portion, particularly the non-coated part region, of the electrode substrate, and the process defect rate may increase, which are problems.

Therefore, there is a need for a technology for increasing the loading amount of the electrode mixture layer, minimizing the volume increase of the electrode, and reducing the process failure.

### [Prior art literature]

### [Patent Document]

US Patent Publication No. 2011-0289790
US 2020/156128 A1
US 2014/202735 A1

### [Disclosure]

### [Technical Problem]

The present technology was developed to solve the above problems, and an object of the present technology is to provide an electrode rolling apparatus and method for performing a multi-stage induction heating.

### [Technical Solution]

The present invention provides an apparatus for rolling an electrode substrate as defined in the independent claim 1, the apparatus includes a current collector layer and an electrode mixture layer formed on one surface or two surfaces of the current collector layer.

**In** one example, the first and second induction heating units induction-heat a region including a boundary line of a coated part and a non-coated part of an electrode substrate, respectively.

**In** the present invention, the first induction heating unit induction-heats a partial region of the coated part and an entire region of the non-coated part which are located at two sides based on the boundary line of the coated part and the non-coated part of the electrode substrate. Further, the second induction heating unit induction-heats a partial region of the coated part which is located at one side based on the boundary line of the coated part and the non-coated part of the electrode substrate.

**In** another example, the first induction heating unit induction-heats a partial region of the coated part and an entire region of the non-coated part which are located at two sides based on the boundary line of the coated part and the non-coated part of the electrode substrate. Further, the second induction heating unit induction-heats the coated part and the non-coated part, based on the boundary line of the coated part and the non-coated part of the electrode substrate.

In a specific example, a ratio (MD: TD) of a length in a machine direction (MD) to a length in a transverse direction (TD) of a heating plate of the first induction heating unit is in a range of 10: 90 to 30: 70. Further, a ratio (MD: TD) of a length in a machine direction (MD) to a length in a transverse direction (TD) of a heating plate of the second induction heating unit is in a range of 60: 40 to 85: 15.

In a more specific example, the area of the heating plate of the first induction heating unit is in the range of 1,300 to 2,000 mm². Further, the area of the heating plate of the second induction heating unit is in the range of 800 to 1,400 mm².

In a specific example, the nip pressure, by which the electrode rolling unit rolls the electrode substrate, is in the range of 1.8 to 6 ton/cm.

In a specific example, heating plates of the first induction heating unit are positioned at an upper portion, a lower portion, or upper and lower portions of two side surfaces of the electrode substrate, respectively. The electrode rolling unit is positioned in a region which covers the coated part of the electrode substrate. Further, heating plates of the second induction heating unit are positioned at an upper portion, a lower portion, or upper and lower portions of two side surfaces of the electrode substrate, respectively. The positions of the heating plates of the first and second induction heating units and the electrode rolling unit are based on the moving path of the electrode substrate.

Further, the present invention provides a method for rolling an electrode substrate as defined in the independent claim 5, the method includes a current collector layer and an electrode mixture layer formed on one surface or two surfaces of the current collector layer.

In one example, the electrode substrate includes a region insulation-coated along a boundary line between a coated part and a non-coated part, and a region, where the electrode substrate is induction-heated, includes the insulation-coated region during the first-induction heating and the second-induction heating.

In the present invention, during the first-induction-heating, a partial region of the coated part and an entire region of the non-coated part, which are located at two sides based on the boundary line of the coated part and the non-coated part of the electrode substrate, are induction-heated, and during the second-induction-heating, a partial region of the coated part, which is located at one side based on the boundary line of the coated part and the non-coated part of the electrode substrate, is induction-heated.

In another example, during the first-induction-heating, a partial region of the coated part and an entire region of the non-coated part, which are located at two sides based on the boundary line of the coated part and the non-coated part of the electrode substrate, are induction-heated, and during the second-induction-heating, the coated part and the non-coated part are induction-heated based on the boundary line of the coated part and the non-coated part of the electrode substrate.

In a specific example, the electrode substrate includes a region insulation-coated along a boundary line between a coated part and a non-coated part.

In one example, the electrode substrate is heated to a temperature of 80°C or less during the first-induction-heating, and the electrode substrate is heated to a temperature of 60°C or more during the second-induction-heating.

In a specific example, during the rolling, the electrode substrate is rolled by a nip pressure in a range of 1.8 to 6 ton/cm.

In a specific example, during the rolling, the electrode substrate s transferred in a machine direction (MD), and a transfer speed is in a range of 10 to 110 m/min.

In a specific example, the rolling is performed for an electrode substrate which has gone through a separate drying process. This means that after applying the drying process to the electrode substrate, the above-described electrode rolling method is applied to the dried electrode substrate.

### [Advantageous Effects]

According to the electrode rolling apparatus and method of the present technology, it is possible to prevent generation of cambers on the non-coated part in the process of rolling an electrode substrate and increase the efficiency of the manufacturing process.

### [Brief Description of the Drawings]

FIG. 1 illustrates a process of rolling an electrode according to an embodiment of the present invention.
FIGS. 2 and 3 are schematic diagrams illustrating a first induction heating process and a second induction heating process, respectively, according to an embodiment of the present invention.
FIG .4 is a flowchart illustrating an electrode rolling process according to an embodiment of the present invention.
FIGS. 5 and 6 are graphs showing results of physical property evaluation for electrode substrate specimen according to examples and a comparative example, respectively.
FIGS. 7 and 8 show the results of evaluating position defect rates for electrode substrate specimens according to the comparative example and example 1.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

The present disclosure provides an apparatus for rolling an electrode. In one example, an apparatus for rolling an electrode substrate including a current collector layer and an electrode mixture layer formed on one surface or two surfaces of the current collector layer according to the present technology includes: a first induction heating unit configured to induction-heat an electrode substrate; an electrode rolling unit configured to roll the first induction-heated electrode substrate; and a second induction heating unit configured to induction-heat the rolled electrode substrate.

As a way to implement a high density electrode, the nip pressure applied to the electrode substrate is increased. **In** this process, cambers may be generated on the side portion, particularly the non-coated part region, of the electrode substrate, and the process defect rate may increase, which are problems. By performing the process of induction-heating each electrode substrate before and after the process of rolling the electrode substrate, it was confirmed that the above-described camber generation could be significantly decreased even if the electrode substrate was rolled with a high nip pressure. Further, if the cambers of the electrode substrate decrease, the process defect rate can be lowered, and the winding amount can be increased at the time of winding the electrode substrate. Therefore, by applying the electrode rolling apparatus according to the present technology to the manufacture of the electrode, the process efficiency can be significantly increased.

Specifically, the electrode rolling apparatus of the present technology includes first and second induction heating units formed at the front end and the rear end of the electrode rolling unit, respectively. The first induction heating unit resolves the stress applied to the electrode substrate by performing induction heating before rolling the electrode substrate. The second induction heating unit resolves the stress which remains despite the first induction heating, and resolves the stress applied to the electrode substrate during the rolling process. Further, there is an effect of uniformizing the stretch of the metal foil which forms a current collector layer by applying a second induction heating unit.

**In** the present technology, the electrode substrate is induction-heated on the basis of the boundary line of the coated part and the non-coated part of the electrode substrate through the first and second induction heating units. Specifically, the first and second induction heating units induction-heat a region including a boundary line of a coated part and a non-coated part of an electrode substrate, respectively. The coated part means a region, where the electrode mixture layer is applied, in the current collector layer, and the non-coated part means a region, where the electrode mixture layer is not applied, in the current collector layer. Therefore, lamination structures and thicknesses of the coated part and the non-coated part are different, and the stress applied to the electrode substrate is concentrated on the boundary line of the coated part and the non-coated part. **In** one example, the first induction heating unit induction-heats a partial region of the coated part and an entire region of the non-coated part which are located at two sides based on the boundary line of the coated part and the non-coated part of the electrode substrate. Further, the second induction heating unit induction-heats a partial region of the coated part which is located at one side based on the boundary line of the coated part and the non-coated part of the electrode substrate.

In another example, the first induction heating unit induction-heats a partial region of the coated part and an entire region of the non-coated part which are located at two sides based on the boundary line of the coated part and the non-coated part of the electrode substrate. Further, the second induction heating unit induction-heats the coated part and the non-coated part, based on the boundary line of the coated part and the non-coated part of the electrode substrate. In this case, the second induction heating unit may perform induction heating, centering on the boundary line of the coated part and the non-coated part of the electrode substrate. Herein, it is possible to simultaneously heat partial regions of the coated part and the non-coated part.

In another example, a ratio (MD: TD) of a length in a machine direction (MD) to a length in a transverse direction (TD) of a heating plate of the first induction heating unit is in a range of 10: 90 to 30: 70. Specifically, in the heating plate of the first induction heating unit, the ratio (MD: TD) of the length in the machine direction (MD) to the length in the transverse direction (TD) is in the range of 15: 85 to 30: 70, the range of 20: 80 to 30: 70, the range or 10: 90 to 25: 75, the range of 10: 90 to 20: 80, the range of 15: 85 to 25: 75, or 20: 80. Further, a ratio (MD: TD) of a length in a machine direction (MD) to a length in a transverse direction (TD) of a heating plate of the second induction heating unit is in a range of 60: 40 to 85: 15. Specifically, in the heating plate of the second induction heating unit, the ratio (MD: TD) of the length in the machine direction (MD) to the length in the transverse direction (TD) is in the range of 65: 35 to 85: 15, the range of 60: 40 to 80: 20, the range of 70: 30 to 80: 20, or 75: 25. Specifically, in the first induction heating which is performed before rolling the electrode substrate, a large region of the electrode substrate is induction-heated for relatively a short time. In the second induction heating which is performed after rolling the electrode substrate, induction heating is concentrated on a specific region of the electrode substrate for relatively a long time.

In a specific example, the area of the heating plate of the first induction heating unit is in the range of 1,300 to 2,000 mm². For example, the heating plate of the first induction heating unit has a structure where the width in the machine direction (MD) is 20 mm, and the width in the transverse direction (TD) is 80 mm. Further, the area of the heating plate of the second induction heating unit is in the range of 800 to 1,400 mm². For example, the heating plate of the second induction heating unit has a structure where the width in the machine direction (MD) is 60 mm, and the width in the transverse direction (TD) is 20 mm.

In another example, the nip pressure, by which the electrode rolling unit rolls the electrode substrate, is in the range of 1.8 to 6 ton/cm. Specifically, in the electrode rolling unit, the nip pressure applied to the electrode substrate is in the range of 2 to 6 ton/cm, the range of 2.5 to 6 ton/cm, the range of 2.8 to 6 ton/cm, or the range of 2.8 to 4 ton/cm. As a way to implement a high density electrode, the nip pressure applied to the electrode substrate in increased. In the present technology, it is possible to significantly lower the camber generation level even if the electrode substrate is rolled with a nip pressure of relatively a high level.

In one example, heating plates of the first induction heating unit are positioned at an upper portion, a lower portion, or upper and lower portions of two side surfaces of the electrode substrate, respectively, based on a moving path of the electrode substrate, the electrode rolling unit is positioned in a region which covers the coated part of the electrode substrate, based on the moving path of the electrode substrate, and heating plates of the second induction heating unit are positioned at an upper portion, a lower portion, or upper and lower portions of two side surfaces of the electrode substrate, respectively, based on the moving path of the electrode substrate.

In the present, the moving path of the electrode substrate means designating the position of the heating plate and the rolling unit for heating or rolling the electrode substrate based on the electrode substrate which moves along the conveyor line.

**In** the present technology, the first and second induction heating units induction-heat two side surfaces of the electrode substrate, and specifically induction-heat the electrode substrate, centering on the boundary line of the coated part and the non-coated part of the electrode substrate. Further, the electrode rolling unit rolls the front surface of the electrode substrate, and specifically rolls the coated part of the electrode substrate. **In** some cases, in the present technology, the first and second induction heating units induction-heat two side surfaces of the electrode substrate, respectively. Specifically, the first and second induction heating units induction-heat the electrode substrate, centering on the boundary line of the coated part and the non-coated part of the electrode substrate, and induction-heat a range including a specific region of the coated part and the non-coated part, respectively.

Further, the present technologyprovides a method for rolling an electrode by using the above described electrode rolling apparatus. In one example, a method for rolling an electrode substrate including a current collector layer and an electrode mixture layer formed on one surface or two surfaces of the current collector layer according to the present technology includes: first-induction-heating an electrode substrate; rolling the first-induction-heated electrode substrate by a certain nip pressure or more; and second-induction-heating the rolled electrode substrate. According to the electrode rolling method of the present technology, by performing first and second induction heating steps before and after rolling an electrode substrate, respectively, it is possible to significantly reduce the camber generation even if the electrode substrate is rolled with a high nip pressure, the process defect rate can be reduced, and the winding amount can be increased at the time of winding the electrode substrate.

In one example, the electrode substrate includes a region insulation-coated along a boundary line between a coated part and a non-coated part, and a region, where the electrode substrate is induction-heated, includes the insulation-coated region during the first-induction heating and the second-induction heating.

**In** another example, during the first-induction-heating, a partial region of the coated part and an entire region of the non-coated part, which are located at two sides based on the boundary line of the coated part and the non-coated part of the electrode substrate, are induction-heated, and during the second-induction-heating, a partial region of the coated part, which is located at one side based on the boundary line of the coated part and the non-coated part of the electrode substrate, is induction-heated. Specifically, according the electrode rolling method of the present disclosure, in the first induction heating step, the stress applied to the electrode substrate is resolved, and in the second induction heating step, the remaining stress and the stress applied to the electrode substrate are resolved. Further, the second induction heating step shows the effect of uniformizing the stretch of the metal foil. Typically, an electrode camber is generated due to the stretch difference between the coated part and the non-coated part of the electrode. In the present technology, by applying the 2-stage induction heating, the additional stretching of the non-coated part is induced, through which the stretch difference between the coated part and the non-coated part is reduced, and the electrode camber is improved.

In another example, during the first-induction-heating, a partial region of the coated part and an entire region of the non-coated part, which are located at two sides based on the boundary line of the coated part and the non-coated part of the electrode substrate, are induction-heated, and during the second-induction-heating, the coated part and the non-coated part are induction-heated based on the boundary line of the coated part and the non-coated part of the electrode substrate. In this case, in the second induction heating step, the electrode substrate is heated, centering on the boundary line of the coated part and the non-coated part, and a region including a specific region of the coated part and the non-coated part, respectively, is induction-heated.

In one example, the electrode substrate includes a region insulation-coated along a boundary line between a coated part and a non-coated part. In the present technology, when the electrode substrate includes the above-described insulation-coated region, the boundary line of the coated part and the non-coated part of the electrode substrate may mean the insulation-coated region. The insulation-coated region is, for example, a region where an insulating coating layer, which contains inorganic elements along the line where the coated part and the non-coated part contact, is formed.

In one example, the electrode substrate is heated to a temperature of 80°C or less during the first-induction-heating, and the electrode substrate is heated to a temperature of 60°C or more during the second-induction-heating. Specifically, during the first induction heating step, the electrode substrate is heated to a temperature in a range of 45 to 80°C or 45 to 60°C. Further, during the second induction heating step, the electrode substrate is heated to a temperature in a range of 60 to 140°C or 80 to 105°C. In the first induction heating step, the electrode substrate is heated to a relatively low temperature. This is to resolve the stress of the non-coated part before rolling. Further, in the second induction heating step, the electrode substrate is heated to a relatively high temperature. This is to resolve the stress concentrated during the rolling process and uniformize the stretched level of the non-coated part. For reference, the temperature of the heated electrode substrate in the present technology was evaluated based on the temperature of the electrode mixture layer.

In another example, during the electrode rolling step, the nip pressure, by which the electrode rolling unit rolls the electrode substrate, is in the range of 1.8 to 6 ton/cm. Specifically, in the electrode rolling step, the nip pressure applied to the electrode substrate is in the range of 2 to 6 ton/cm, the range of 2.5 to 6 ton/cm, the range of 2.8 to 6 ton/cm, or the range of 2.8 to 4 ton/cm. As a way to implement a high density electrode, the nip pressure applied to the electrode substrate in increased. In the present technology, it is possible to significantly lower the camber generation level even if the electrode substrate is rolled with a nip pressure of relatively a high level.

In one example, during the rolling, the electrode substrate is transferred in a machine direction (MD), and a transfer speed is in a range of 10 to 110 m/min. For example, it is possible to perform the first and second induction heating steps in a state in which the transfer of the electrode substrate is interrupted, but it is advantageous for process efficiency to perform the first and second induction heating steps during transfer of the electrode substrate. Specifically, the transfer speed of the electrode substrate is in the range of 10 to 100 m/min, the range of 10 to 90 m/min, the range of 10 to 80 m/min, the range of 50 to 110 m/min, or the range of 70 to 90 m/min. The transfer rate of the electrode substrate is in the range that does not degrade the process efficiency while maintaining the product uniformity according to rolling.

In a concrete example, the electrode rolling apparatus or method described above is applicable to an electrode substrate which has gone through a separate drying process. After discharging the electrode slurry on one surface or both surfaces of the electrode current collector, the electrode substrate goes through the drying process. By applying the above-described electrode rolling apparatus or method to the electrode having gone through the drying process, it is possible to resolve the stress applied to the electrode substrate and reduce the camber generation on the non-coated part region.

In one example, the electrode means a positive electrode and/or a negative electrode of a lithium secondary battery.

The positive electrode has a structure in which a positive electrode active material layer of a two-layer structure is stacked on a positive electrode current collector. In one example, the positive electrode active material layer includes a positive electrode active material, a conductive material, and a binder polymer, and if necessary, may further include a positive electrode additive commonly used in the art.

The positive electrode active material may be a lithium-containing oxide, and may be the same or different. A lithium-containing transition metal oxide may be used as the lithium-containing oxide.

For example, the lithium-containing transition metal oxide may be any one or a mixture of two or more selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, O≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3) and LiₓFePO₄(0.5<x<1.3), and the lithium-containing transition metal oxide may be coated with a metal or metal oxide such as aluminum (Al). Further, in addition to the lithium-containing transition metal oxide, at least one selected from the group consisting of sulfide, selenide, and halide may be used.

The positive electrode active material may be included in the range of 94.0 to 98.5 wt% in the positive electrode active material layer. When the content of the positive electrode active material satisfies the above range, it is advantageous in terms of manufacturing a high-capacity battery and providing sufficient conductivity of the positive electrode or adhesion between electrode materials.

The current collector used for the positive electrode is a metal having high conductivity, and any metal which the positive electrode active material slurry may be easily attached to and which is not reactive in the voltage range of the electrochemical device can be used. Specifically, non-limiting examples of the current collector for the positive electrode include aluminum, nickel, or a foil manufactured by a combination thereof.

The positive electrode active material layer further includes a conductive material. The conductive material is usually added in an amount of 1 to 30% by weight based on the total weight of the mixture including the positive electrode active material. Such a conductive material is not particularly limited as long as it has conductivity without causing a chemical change in the secondary battery. For example, one or more selected from the group consisting of graphite such as natural graphite or artificial graphite; carbon black such as carbon black, acetylene black, ketjen black, channel black, furnace black, lamp black, or thermal black; conductive fiber such as carbon fiber or metal fiber; metal powder such as carbon fluoride, aluminum, or nickel powder; conductive whiskey such as zinc oxide or potassium titanate; conductive metal oxide such as titanium oxide; and polyphenylene derivative may be used as the conductive material.

The negative electrode has a structure in which a negative electrode active material layer of a two-layer structure is stacked on a negative electrode current collector. In one example, the negative electrode active material layer includes a negative electrode active material, a conductive material, and a binder polymer, and if necessary, may further include a negative electrode additive commonly used in the art.

The negative electrode active material may include a carbon material, lithium metal, silicon or tin. When a carbon material is used as the negative electrode active material, both low crystalline carbon and high crystalline carbon may be used. Representative examples of low crystalline carbon include soft carbon and hard carbon are typical. Representative examples of high crystalline carbon include one or more selected from the group consisting of natural graphite, kish graphite, pyrolytic carbon, mesophase pitch based carbon fiber, mesocarbon microbeads, mesophase pitches, and high-temperature calcined carbons such as petroleum or coal tar pitch derived cokes.

Non-limiting examples of the current collector used for the negative electrode include copper, gold, nickel, or a foil manufactured by a copper alloy or a combination thereof. In addition, the current collector may be used by stacking substrates made of the above materials.

In addition, the negative electrode may include a conductive material and a binder commonly used in the art.

Hereinafter, the present invention will be described in more detail through drawings and examples. As the inventive concept allows for various changes and numerous embodiments, particular embodiments will be illustrated in the drawings and described in detail in the text. However, this is not intended to limit the present invention to the specific form disclosed, and it should be understood to include all changes, equivalents, and substitutes included in the scope of the present invention.

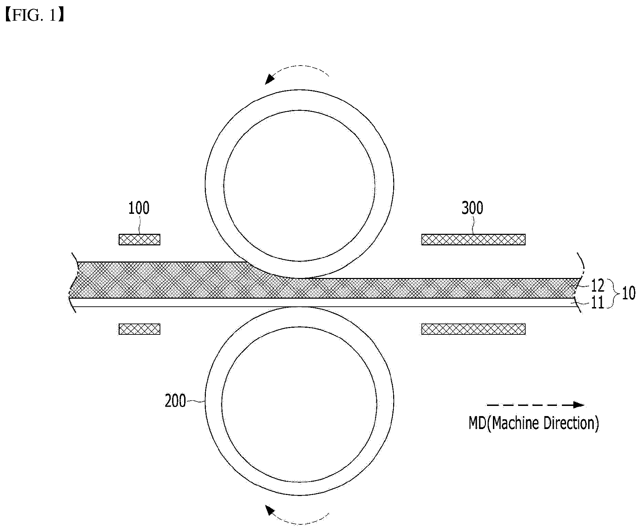

FIG. 1 illustrates a process of rolling an electrode according to an embodiment of the present invention. Referring to FIG. 1, the process of rolling an electrode substrate 10 including a current collector layer 11 and an electrode mixture layer 12 formed on the current collector layer 11 includes first-induction-heating the electrode substrate 10 using a first induction heating unit 100 and then rolling the electrode substrate 10 through a roller 200. The rolled electrode substrate 10 goes through induction heating again through a second induction heating unit 300.

Specifically, the electrode rolling apparatus of the present technology forms first and second induction heating units 100 and 300 at the front end and the rear end of the electrode rolling unit using the roller 200, respectively. The first induction heating unit 100 induction-heats the electrode substrate 10 before going through the rolling process, through which the stress applied to the electrode substrate 10 is resolved. The second induction heating unit 300 can resolve the stress, which remains even after the first induction heating 100, and the stress applied during the rolling process, and can uniformize the stretch of the metal foil for forming the current collector layer 11.

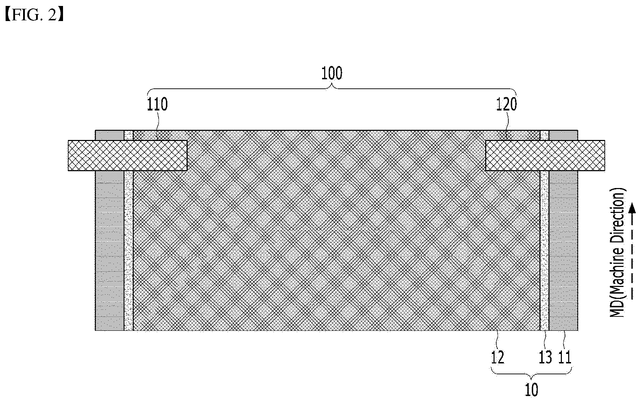

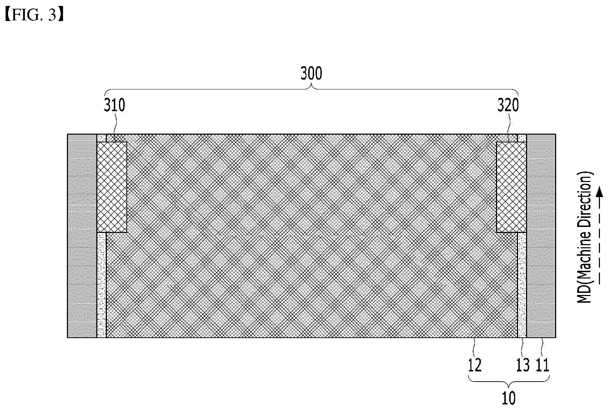

FIGS. 2 and 3 are schematic diagrams illustrating a first induction heating process and a second induction heating process, respectively, according to an embodiment of the present invention.

First, referring to FIG. 2, the first induction heating unit 100 induction-heats the electrode substrate 10, centering on the boundary line of the coated part and the non-coated part. The first induction heating unit 100 heats the electrode substrate 10 through first induction heating plates 110 and 120 which are positioned on both ends of the electrode substrate 10, respectively. The first induction heating unit 100 induction-heats a partial region of the coated part 12 and the entire region of the non-coated part 11 which are positioned at two sides of the insulation coating layer 13 which corresponds to the boundary line of the coated part 12 and the non-coated part 11 of the electrode substrate. For example, the first induction heating plates 110 and 120 have the width in the machine direction (MD) of 80 mm and the width in the transverse direction (TD) of 20 mm, respectively.

Referring to FIG. 3, the second induction heating unit 300 induction-heats a partial region of the coated part 12 which is positioned at one side of the insulation coating layer 13 which corresponds to the boundary line of the coated part 12 and the non-coated part 11 of the electrode substrate 10. The second induction heating unit 300 heats the electrode substrate 10 through second induction heating plates 310 and 320 which are positioned on both ends of the electrode substrate 10, respectively. For example, the second induction heating plates 310 and 320 have the width in the machine direction (MD) of 20 mm and the width in the transverse direction (TD) of 60 mm, respectively.

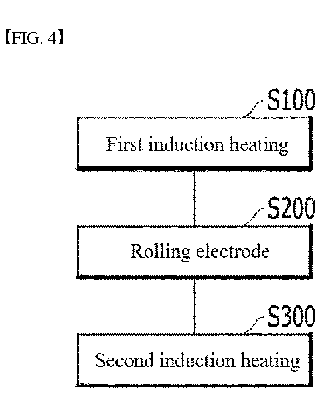

FIG .4 is a flowchart illustrating an electrode rolling process according to an embodiment of the present invention. Referring to FIG. 4, the electrode rolling method according to the present technology includes: first-induction-heating an electrode substrate (S100); rolling the first-induction-heated electrode substrate by a certain nip pressure or more (S200); and second-induction-heating the rolled electrode substrate (S300). For example, in the first induction heating step (S100), the electrode substrate is induction-heated at a low temperature in the range of 48 to 55°C. The heated electrode substrate goes through a step of rolling the electrode substrate with a nip pressure of 2.8 to 3 ton/cm and then goes through the second induction heating step (S300). In the second induction heating step (S300), the electrode substrate is induction-heated to a temperature in the range of 80 to 100°C and more specifically to a temperature in the range of 85 to 95°C.

### [Detailed Description of the Preferred Embodiments]

Hereinafter, the present invention will be described in more detail through examples.

### Comparative example and Examples 1 to 3

97 parts by weight of NCM (LiNi_{0.8}Co_{0.1}Mn_{0.1}O₂) as a positive electrode active material, 0.1 parts by weight of carbon black (FX35, Denka, average diameter (D50) 15 to 40 nm) as a conductive material, and 2 parts by weight of binder elements were added to NMP (N-methyl-2-pyrrolidone) as a solvent to prepare an electrode slurry. The prepared electrode slurry was coated on the aluminum foil with the loading amount of 500 mg/25 cm², to thereby manufacture an electrode substrate.

The manufactured electrode substrate was rolled. Specifically, the electrode substrate was rolled using a roller with a nip pressure of 3.0 ton/cm, and each electrode substrate was induction-heated before and after the rolling with conditions of Table 1.

**[Table 1]**

| Example No. | IH No. of times | 1st IH temperature (°C) | 2nd IH temperature (°C) | Transfer speed (m/min) |
|---|---|---|---|---|
| Comparative example | 1 | 51 | - | 80 |
| Example 1 | 2 | 51 | 85 | 80 |
| Example 2 | 2 | 51 | 90 | 80 |
| Example 3 | 2 | 51 | 95 | 80 |

In the comparative example, only the first induction heating was performed, and in the examples 1 to 3, first and second induction heating processes were performed, respectively. In the examples 1 to 3, the temperature of the electrode substrate at the second induction heating was 85°C, 90°C and 95°C, respectively.

### Experimental Example 1

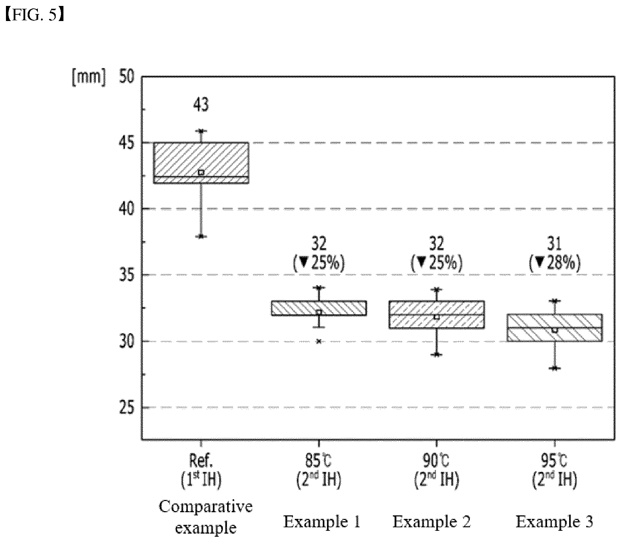

The camber generation levels for manufactured electrode substrate specimens were compared. FIG. 5 shows results of evaluating camber generation levels for respective 10 electrode substrate specimens according to a comparative example and examples. Referring to FIG. 5, the camber generation level of the electrode substrate according to the comparative example was about 43 mm. On the other hand, the camber generation level of the electrode substrate according to examples 1 to 3 was 31 to 32 mm, which was smaller than that of the comparative example by 25 to 28%.

### Experimental Example 2

Electrode tab strengths for the manufactured electrode substrate specimens were compared. Specifically, after forming a notch-type electrode tab on the non-coated part region of the electrode substrate, the tensile strength for the formed electrode tab was measured.

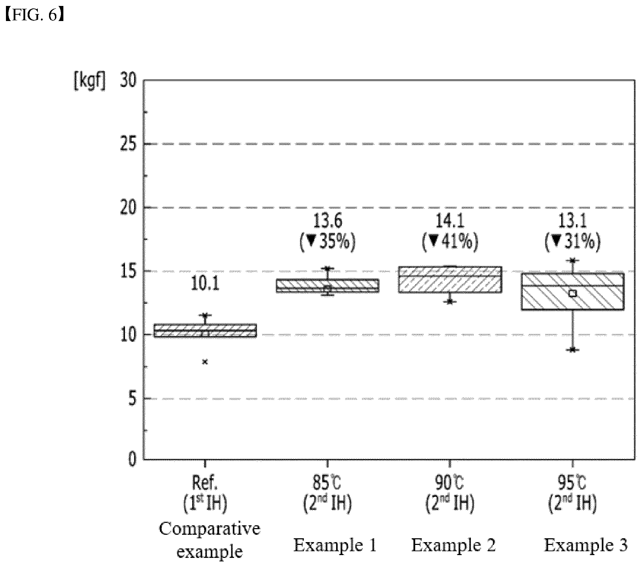

FIG. 6 shows results of evaluating tab strengths for respective 10 electrode substrate specimens according to a comparative example and examples. Referring to FIG. 6, the tab strength of the electrode substrate according to the comparative example is about 10.1 kgf. On the other hand, the tab strength of the electrode substrate according to examples 1 to 3 is 13.1 to 14.1 kgf, which is a value greater than that in the comparative example by 31 to 41%.

### Experimental Example 3

The position defect rate was evaluated for the prepared electrode substrate specimen. Specifically, the electrode was manufactured after performing the process of punching the electrode substrate according to the comparative example and example 1. The x-axis defect rate, the y-axis defect rate, TW defect rate, mis-measurement/misrecognition rate through vision inspection, and mismatch level for the position of the electrode tab part for each manufactured electrode were evaluated, and their sums were compared.

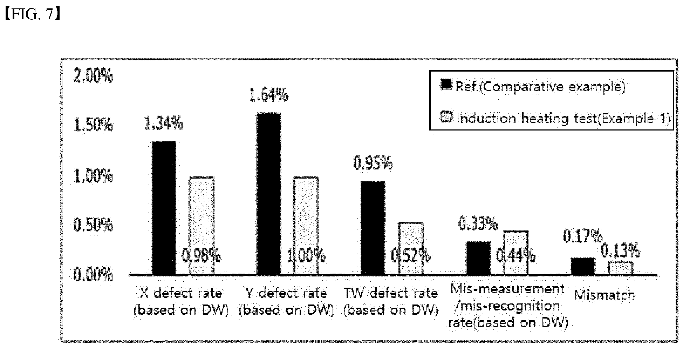

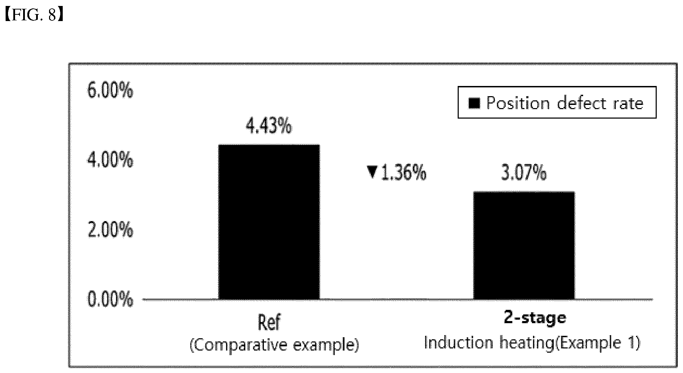

FIGS. 7 and 8 show the results of evaluating position defect rates for electrode substrate specimens according to the comparative example and example 1. FIG. 7 shows the result of evaluating the defect rate for each item, and FIG. 8 shows the sums of evaluation results by items. The position defect rate of the electrode substrate according to the comparative example was about 4.43%, but the position defect rate of the electrode substrate according to the example 1 was 3.07% which was significantly smaller than that in the comparative example.

In the above, the present invention has been described in more detail through the drawings and examples. Accordingly, the embodiments described in the specification and the configurations described in the drawings are only the most preferred embodiments of the present invention, and do not represent all of the technical ideas of the present invention.

### [Description of reference numerals]

10: electrode substrate
11: current collector layer
12: electrode mixture layer
13: insulation coating layer
100: first induction heating unit
110, 120: first induction heating plate

200: roller
300: second induction heating unit
310, 320: second induction heating plate

## Claims

1. An apparatus for rolling an electrode substrate (10) including a current collector layer and an electrode mixture layer formed on one surface or two surfaces of the current collector layer, the apparatus comprising:
a first induction heating unit (100) configured to induction-heat the electrode substrate (10);
an electrode rolling unit (200) configured to roll the first induction-heated electrode substrate (10); and
**characterized in that**
a second induction heating unit (300) configured to induction-heat the rolled electrode substrate,
the first induction heating unit (100) is configured to induction-heat a partial region of a coated part (12) of the electrode substrate (10) and an entire region of a non-coated part (11) of the electrode substrate (10) which are located at two sides based on a boundary line of the coated part (12) and the non-coated part (11) of the electrode substrate (10), and
the second induction heating unit (300) is configured to induction-heat the partial region of the coated part (12) which is located at one side based on the boundary line of the coated part (12) and the non-coated part (11) of the electrode substrate (10).

2. Response to communication pursuant to Rules 70(2)-70a(2) EPC dated 16.08.2024 The apparatus of claim 1, wherein the first and second induction heating units (100, 300) are configured to induction-heat a region including the boundary line of the coated part and the non-coated part of the electrode substrate, respectively.

3. The apparatus of claim 1, wherein a ratio (MD: TD) of a length in a machine direction (MD) to a length in a transverse direction (TD) of a heating plate of the first induction heating unit (100) is in a range of 10: 90 to 30: 70, and
wherein a ratio (MD: TD) of a length in a machine direction (MD) to a length in a transverse direction (TD) of a heating plate of the second induction heating unit (300) is in a range of 60: 40 to 85: 15.

4. The apparatus of claim 1, wherein heating plates of the first induction heating unit (100) are positioned at an upper portion, a lower portion, or upper and lower portions of two side surfaces of the electrode substrate, respectively, based on a moving path of the electrode substrate (10),
wherein the electrode rolling unit (200) is positioned in a region which covers a coated part of the electrode substrate (10), based on the moving path of the electrode substrate (10), and
wherein heating plates of the second induction heating unit (300) are positioned at an upper portion, a lower portion, or upper and lower portions of two side surfaces of the electrode substrate (10), respectively, based on a moving path of the electrode substrate (10).

5. A method for rolling an electrode substrate including a current collector layer and an electrode mixture layer formed on one surface or two surfaces of the current collector layer, the method comprising:
first-induction-heating the electrode substrate (10);
rolling the first-induction-heated electrode substrate by a certain nip pressure or more; and
**characterized in that**
second-induction-heating the rolled electrode substrate (10),
during the first-induction-heating, a partial region of a coated part (12) of the electrode substrate (10) and an entire region of a non-coated part (11) of the electrode substrate (10), which are located at two sides based on a boundary line of the coated part (12) and the non-coated part (11) of the electrode substrate (10), are induction-heated, and
during the second-induction-heating, the partial region of the coated part (12), which is located at one side based on the boundary line of the coated part (12) and the non-coated part (11) of the electrode substrate (10), is induction-heated.

6. The method of claim 5, wherein the electrode substrate (10) includes a region insulation-coated (13) along the boundary line between the coated part (12) and the non-coated part (11), and
wherein a region where the electrode substrate (10) is induction-heated includes the insulation-coated region (13) during the first-induction heating and the second-induction heating.

7. The method of claim 5, wherein the electrode substrate (10) is heated to a temperature of 80°C or less during the first-induction-heating, and
wherein the electrode substrate (10) is heated to a temperature of 60°C or more during the second-induction-heating.

8. The method of claim 5, wherein during the rolling, the electrode substrate (10) is rolled by the nip pressure in a range of 1.8 to 6 ton/cm.

9. The method of claim 5, wherein during the rolling, the electrode substrate (10) is transferred in a machine direction (MD), and a transfer speed is in a range of 10 to 110 m/min.

10. The method of claim 5, wherein the rolling is performed for an electrode substrate (10) which has gone through a separate drying process.

## Patentansprüche

1. Vorrichtung zum Walzen eines Elektrodensubstrats (10), welches eine Stromsammler-Schicht und eine Elektrodenmischung-Schicht umfasst, welche an einer Fläche oder zwei Flächen der Stromsammler-Schicht gebildet ist, die Vorrichtung umfassend:
eine erste Induktion-Heizeinheit (100), welche dazu eingerichtet ist, das Elektrodensubstrat (10) mittels Induktion zu heizen;
eine Elektroden-Walzeinheit (200), welche dazu eingerichtet ist, das erste mittels Induktion geheizte Elektrodensubstrat (10) zu walzen; und
**dadurch gekennzeichnet, dass**
eine zweite Induktion-Heizeinheit (300) dazu eingerichtet ist, das gewalzte Elektrodensubstrat mittels Induktion zu heizen,
die erste Induktion-Heizeinheit (100) dazu eingerichtet ist, eine teilweise Region eines beschichteten Teils (12) des Elektrodensubstrats (10) und eine gesamte Region eines nicht-beschichteten Teils (11) des Elektrodensubstrats (10) mittels Induktion zu heizen, welche an zwei Seiten auf Grundlage einer Grenzlinie des beschichteten Teils (12) und des nicht-beschichteten Teils (11) des Elektrodensubstrats (10) angeordnet sind, und
die zweite Induktion-Heizeinheit (300) dazu eingerichtet ist, die teilweise Region des beschichteten Teils (12), welche an einer Seite auf Grundlage der Grenzlinie des beschichteten Teils (12) und des nicht-beschichteten Teils (11) des Elektrodensubstrats (10) angeordnet ist, mittels Induktion zu heizen.

2. Vorrichtung nach Anspruch 1, wobei die ersten und zweiten Induktion-Heizeinheiten (100, 300) jeweils dazu eingerichtet sind, eine Region mittels Induktion zu heizen, welche die Grenzlinie des beschichteten Teils und des nicht-beschichteten Teils des Elektrodensubstrats umfasst.

3. Vorrichtung nach Anspruch 1, wobei ein Verhältnis (MD:TD) einer Länge in einer Maschinenrichtung (MD) zu einer Länge in einer transversalen Richtung (TD) einer Heizplatte der ersten Induktion-Heizeinheit (100) in einem Bereich von 10:90 bis 30:70 liegt, und
wobei ein Verhältnis (MD:TD) einer Länge in einer Maschinenrichtung (MD) zu einer Länge in einer transversalen Richtung (TD) einer Heizplatte der zweiten Induktion-Heizeinheit (300) in einem Bereich von 60:40 bis 85:15 liegt.

4. Vorrichtung nach Anspruch 1, wobei Heizplatten der ersten Induktion-Heizeinheit (100) jeweils an einem oberen Abschnitt, einem unteren Abschnitt oder oberen und unteren Abschnitten von zwei Seitenflächen des Elektrodensubstrats auf Grundlage eines Bewegungspfads des Elektrodensubstrats (10) positioniert sind,
wobei die Elektroden-Walzeinheit (200) in einer Region positioniert ist, welche einen beschichteten Teil des Elektrodensubstrats (10) bedeckt, auf Grundlage des Bewegungspfads des Elektrodensubstrats (10), und
wobei Heizplatten der zweiten Induktion-Heizeinheit (300) jeweils an einem oberen Abschnitt, einem unteren Abschnitt oder oberen und unteren Abschnitten von zwei Seitenflächen des Elektrodensubstrats (10) positioniert sind, auf Grundlage eines Bewegungspfads des Elektrodensubstrats (10).

5. Verfahren zum Walzen eines Elektrodensubstrats, welches eine Stromsammler-Schicht und eine Elektrodenmischung-Schicht umfasst, welche an einer Fläche oder zwei Flächen der Stromsammler-Schicht gebildet ist, das Verfahren umfassend:
erstes Induktionsheizen des Elektrodensubstrats (10);
Walzen des zuerst mittels Induktion geheizten Elektrodensubstrats bei einem bestimmten Walzenabstand-Druck oder mehr;
und **dadurch gekennzeichnet, dass**
zweites Induktionsheizen des gewalzten Elektrodensubstrats (10),
während des ersten Induktionsheizens eine teilweise Region eines beschichteten Teils (12) des Elektrodensubstrats (10) und eine gesamte Region eines nicht-beschichteten Teils (11) des Elektrodensubstrats (10), welche an zwei Seiten auf Grundlage einer Grenzlinie des beschichteten Teils (12) und des nicht-beschichteten Teils (11) des Elektrodensubstrats (10) angeordnet sind, mittels Induktion geheizt werden, und
während des zweiten Induktionsheizens die teilweise Region des beschichteten Teils (12), welche an einer Seite auf Grundlage der Grenzlinie des beschichteten Teils (12) und des nicht-beschichteten Teils (11) des Elektrodensubstrats (10) angeordnet ist, mittels Induktion geheizt wird.

6. Verfahren nach Anspruch 5, wobei das Elektrodensubstrat (10) eine isolationsbeschichtete Region (13) entlang der Grenzlinie zwischen dem beschichteten Teil (12) und dem nicht-beschichteten Teil (11) umfasst, und wobei eine Region, in welcher das Elektrodensubstrat (10) mittels Induktion geheizt wird, die isolationsbeschichtete Region (13) während des ersten Induktionsheizens und des zweiten Induktionsheizens umfasst.

7. Verfahren nach Anspruch 5, wobei das Elektrodensubstrat auf eine Temperatur von 80°C oder weniger während des ersten Induktionsheizens erwärmt wird, und wobei das Elektrodensubstrat (10) auf eine Temperatur von 60°C oder mehr während des zweiten Induktionsheizens erwärmt wird.

8. Verfahren nach Anspruch 5, wobei während des Walzens das Elektrodensubstrat (10) durch den Walzenabstand-Druck in einem Bereich von 1,8 bis 6 Tonnen/cm gewalzt wird.

9. Verfahren nach Anspruch 5, wobei während des Walzens das Elektrodensubstrat (10) in einer Maschinenrichtung (MD) transferiert wird und eine Transfergeschwindigkeit in einem Bereich von 10 bis 110 m/min liegt.

10. Verfahren nach Anspruch 5, wobei das Walzen für ein Elektrodensubstrat (10) durchgeführt wird, welches einen separaten Trocknungsprozess durchlaufen hat.

## Revendications

1. Appareil de laminage d'un substrat d'électrode (10) comportant une couche de collecteur de courant et une couche de mélange d'électrode formée sur une ou deux surfaces de la couche de collecteur de courant, l'appareil comprenant :
une première unité de chauffage par induction (100) configurée pour chauffer par induction le substrat d'électrode (10) ;
une unité de laminage d'électrode (200) configurée pour laminer le premier substrat d'électrode (10)
chauffé par induction ; et
**caractérisé en ce que**
une seconde unité de chauffage par induction (300) configurée pour chauffer par induction le substrat d'électrode laminé,
la première unité de chauffage par induction (100) est configurée pour chauffer par induction une région partielle d'une partie revêtue (12) du substrat d'électrode (10) et une région entière d'une partie non revêtue (11) du substrat d'électrode (10) qui sont situées de deux côtés de part et d'autre d'une ligne de séparation de la partie revêtue (12) et de la partie non revêtue (11) du substrat d'électrode (10), et
la seconde unité de chauffage par induction (300) est configurée pour chauffer par induction la région partielle de la partie revêtue (12) qui est située d'un côté par rapport à la ligne de séparation de la partie revêtue (12) et de la partie non revêtue (11) du substrat d'électrode (10).

2. Appareil selon la revendication 1, dans lequel les première et seconde unités de chauffage par induction (100, 300) sont configurées respectivement pour chauffer par induction une région comportant la ligne de séparation de la partie revêtue et de la partie non revêtue du substrat d'électrode.

3. Appareil selon la revendication 1, dans lequel un rapport (MD: TD) d'une longueur dans une direction machine (MD) à une longueur dans une direction transversale (TD) d'une plaque chauffante de la première unité de chauffage par induction (100) est dans une plage de 10: 90 à 30: 70, et
dans lequel un rapport (MD: TD) d'une longueur dans une direction machine (MD) à une longueur dans une direction transversale (TD) d'une plaque chauffante de la seconde unité de chauffage par induction (300) est dans une plage de 60: 40 à 85: 15.

4. Appareil selon la revendication 1, dans lequel des plaques chauffantes de la première unité de chauffage par induction (100) sont positionnées respectivement au niveau d'une partie supérieure, d'une partie inférieure, ou de parties supérieure et inférieure de deux surfaces latérales du substrat d'électrode, sur la base d'un trajet de déplacement du substrat d'électrode (10),
dans lequel l'unité de laminage d'électrode (200) est positionnée dans une région qui recouvre une partie revêtue du substrat d'électrode (10), sur la base du trajet de déplacement du substrat d'électrode (10), et
dans lequel des plaques chauffantes de la seconde unité de chauffage par induction (300) sont positionnées respectivement au niveau
d'une partie supérieure, d'une partie inférieure, ou de parties supérieure et inférieure de deux surfaces latérales du substrat d'électrode (10), sur la base d'un trajet de déplacement du substrat d'électrode (10).

5. Procédé de laminage d'un substrat d'électrode comportant une couche de collecteur de courant et une couche de mélange d'électrode formée sur une ou deux surfaces de la couche de collecteur de courant, le procédé comprenant :
le premier chauffage par induction du substrat d'électrode (10) ;
le laminage du substrat d'électrode chauffé par le premier chauffage par induction par une certaine pression de pincement ou plus ; et
**caractérisé en ce que**
un second chauffage par induction du substrat d'électrode (10) laminé,
lors du premier chauffage par induction, une région partielle d'une partie revêtue (12) du substrat d'électrode (10) et une région entière d'une partie non revêtue (11) du substrat d'électrode (10), qui sont situées de deux côtés de part et d'autre d'une ligne de séparation de la partie revêtue (12) et de la partie non revêtue (11) du substrat d'électrode (10), sont chauffées par induction, et
lors du second chauffage par induction, la région partielle de la partie revêtue (12), qui est située d'un côté par rapport à la ligne de séparation de la partie revêtue (12) et de la partie non revêtue (11) du substrat d'électrode (10), est chauffée par induction.

6. Procédé selon la revendication 5, dans lequel le substrat d'électrode (10) comporte une région revêtue d'isolation (13) le long de la ligne de séparation entre la partie revêtue (12) et la partie non revêtue (11), et
dans lequel une région où le substrat d'électrode (10) est chauffé par induction comporte la région revêtue d'isolation (13) pendant le premier chauffage par induction et le second chauffage par induction.

7. Procédé selon la revendication 5, dans lequel le substrat d'électrode (10) est chauffé à une température de 80 °C ou moins pendant le premier chauffage par induction, et dans lequel le substrat d'électrode (10) est chauffé à une température de 60 °C ou plus pendant le second chauffage par induction.

8. Procédé selon la revendication 5, dans lequel, pendant le laminage, le substrat d'électrode (10) est laminé par la pression de pincement dans une plage de 1,8 à 6 tonnes/cm.

9. Procédé selon la revendication 5, dans lequel, pendant le laminage, le substrat d'électrode (10) est transféré dans une direction machine (MD), et une vitesse de transfert est dans une plage de 10 à 110 m/min.

10. Procédé selon la revendication 5, dans lequel le laminage est réalisé pour un substrat d'électrode (10) qui a subi un processus de séchage distinct.
